(19) Europäisches Patentamt
European Patent Office
Office européen des brevets

(11) Publication number: **0 164 477 A1**

(12) # EUROPEAN PATENT APPLICATION

(21) Application number: **84401353.2**

(22) Date of filing: **26.06.84**

(51) Int. Cl.[4]: **C 08 L 69/00**
//(C08L69/00, 33:04, 23:00, 25:04, 51:04, 55:00, 83:10, 69:00)

(30) Priority: **14.06.84 US 620711**

(43) Date of publication of application: **18.12.85 Bulletin 85/51**

(84) Designated Contracting States: **DE FR GB IT NL**

(71) Applicant: **GENERAL ELECTRIC COMPANY**
**1 River Road**
**Schenectady New York 12305(US)**

(72) Inventor: **Hedges, Charles Vernon**
**R.R. No 3, Box 268**
**Mt Vernon Indiana 47620(US)**

(72) Inventor: **Mark, Victor**
**701 Marigold Court**
**Evansville Indiana 47712(US)**

(74) Representative: **Catherine, Alain**
**General Electric - Deutschland Munich Patent Operations**
**Frauenstrasse 32**
**D-8000 München 5(DE)**

(54) **Polycarbonates exhibiting improved heat resistance.**

(57) Impact modified polymeric composition exhibiting improved heat resistance comprising in admixture:

(i) at least one linear thermoplastic polymer derived from (a) a carbonate precursor, and (b) at least one dihydric phenol represented by the general formula

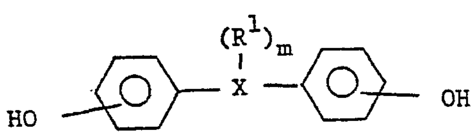

wherein

R[1] is independently selected from monovalent hydrocarbon radicals,

X is selected from monocyclic cycloalkylidene radicals containing from 10 to about 16 ring carbon atoms, and

m is a whole number having a value of from 0 up to the number of repaceable hydrogen atoms present on X; and

(ii) an impact modifying amount of at least one impact modifier.



Croydon Printing Company Ltd

# POLYCARBONATES EXHIBITING IMPROVED HEAT RESISTANCE

## RELATED APPLICATIONS

This application is a continuation-in-part application of copending application Ser. No. 453,105, filed December 27, 1982.

## BACKGROUND OF THE INVENTION

Polycarbonates are well known thermoplastic materials which due to their many advantageous properties find use as thermoplastic engineering materials in many commercial and industrial applications. The polycarbonates exhibit, for example, excellent properties of toughness, flexibility, optical clarity, and heat resistance. The polycarbonates are generally prepared by the coreaction of a dihydric phenol such as bisphenol-A with a carbonate precursor such as phosgene.

While presently available conventional polycarbonates are quite useful in a wide range of applications there nevertheless exists a need, especially in applications involving high temperature environments, for polycarbonates exhibiting greater heat resistance than that possessed by conventional polycarbonates.

It is, therefore, an object of the instant invention to provide polycarbonates which exhibit improved heat resistance.

SUMMARY OF THE INVENTION

In accordance with the instant invention there are provided polycarbonate resins which exhibit improved heat resistance.

These polycarbonates are comprised of at least one repeating structural unit represented by the general fromula

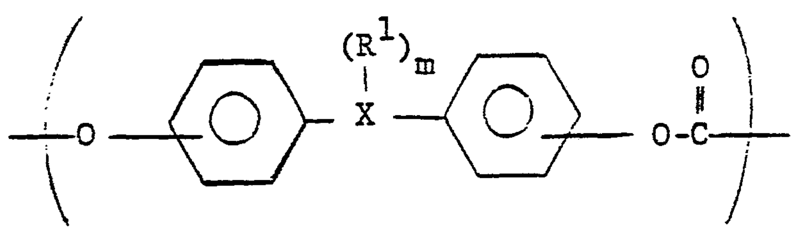

wherein:

$R^1$ is independently selected from monovalent hydrocarbon radicals;

X represents a cycloalkylidene radical containing from 10 to about 16 ring carbon atoms; and

m is selected from whole numbers having a

value of from 0 up to the number of replaceable hydrogen atoms present on X, inclusive.

Also in accordance with the instant invention there are provided impact modified polycarbonates exhibiting improved heat resistance. These polycarbonates contain at least one recurring structural unit of the type described hereinafore and have admixed therewith an amount of at least one impact modifying compound effective to improve the impact properties thereof.

DESCRIPTION OF THE INVENTION

It has been found that linear carbonate polymers can be obtained which exhibit improved heat resistance as compared to conventional polycarbonates.

These novel polycarbonates are derived from:

(i) a carbonate precursor; and

(ii) at least one novel dihydric phenol represented by the general formula

I. 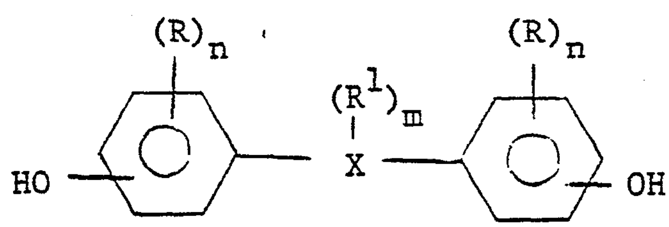

wherein:

R is independently selected from halogen radicals, monovalent hydrocarbon radicals, and monovalent hydrocarbonoxy radicals;

$R^1$ is independently selected from monovalent hydrocarbon radicals;

X represents a cycloalkylidene radical containing from 8 to about 16 ring carbon atoms;

n is independently selected from whole numbers having a value of from 0 to 4 inclusive; and

m is a whole number having a value of from 0 up to the number of hydrogen atoms present on X available for replacement.

The halogen radicals represented by R are preferably selected from chlorine and bromine.

The monovalent hydrocarbon radicals represented by R are selected from alkyl radicals, aryl radicals, aralkyl radicals, alkaryl radicals, and cycloalkyl radicals. The preferred alkyl radicals represented by R are those containing from 1 to about 8 carbon atoms. Some illustrative non-limiting examples of these alkyl radicals include methyl, ethyl, propyl, isopropyl, butyl, isobutyl, tertiarybutyl, pentyl, neopentyl, and the like. The preferred aryl radicals represented by R are those containing from 6 to 12 carbon atoms, i.e., phenyl, naphthyl and biphenyl. The preferred aralkyl and alkaryl radicals represented by R are those containing from 7 to about 14 carbon atoms.

Some illustrative non-limiting examples of these alkaryl and aralkyl radicals include benzyl, tolyl, ethyl-phenyl, and the like. The preferred cycloalkyl radicals represented by R are those containing from 4 to about 6 ring carbon atoms and include cyclobutyl, cyclopentyl and cyclohexyl.

The monovalent hydrocarbonoxy radicals represented by R are preferably selected from alkoxy and aryloxy radicals. The preferred alkoxy radicals are those containing from 1 to about 8 carbon atoms and include, for example, methoxy, butoxy, propoxy, isopropoxy, and the like. The preferred aryloxy radical is phenoxy.

Preferably R is independently selected from monovalent hydrocarbon radicals, with the alkyl radicals being the preferred hydrocarbon radicals.

The monovalent hydrocarbon radicals represented by $R^1$ are selected from alkyl radicals, aryl radicals, alkaryl radicals, aralkyl radicals, and cycloalkyl radicals. The preferred alkyl radicals are those containing from 1 to about 8 carbon atoms. Some illustrative non-limiting examples of these alkyl radicals include methyl ethyl, propyl, isopropyl, butyl, isobutyl, tertiary butyl, pentyl, neopentyl, and the like. The preferred aryl radicals are those containing from 6 to 12 carbon atoms, i.e., phenyl, naphthyl and biphenyl. The preferred aralkyl and alkaryl radicals represented by $R^1$ are those containing from 7 to about 14 carbon atoms. Some

illustrative non-limiting examples of these preferred aralkyl and alkaryl radicals include benzyl, tolyl, ethylphenyl, and the like. The preferred cycloalkyl radicals represented by $R^1$ are those containing from 4 to 6 ring carbon atoms, i.e., cyclobutyl, cyclopentyl and cyclohexyl.

The preferred monovalent hydrocarbon radicals represented by $R^1$ are the alkyl radicals.

In the dihydric phenol compounds of Formula I if more than one R substituent is present on the aromatic nuclear residue they can be the same or different.

Likewise, if more than one $R^1$ substituent is present on the cycloalkylidene radical represented by X they may be the same or different.

In Formula I m preferably represents a whole number having a value of from 0 to about 6.

The cycloalkylidene radicals represented by X are the monocyclic cycloalkylidene radicals which may be represented by the general formula

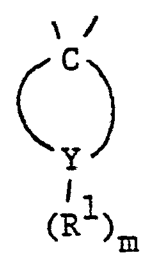

wherein $R^1$ and m are as defined hereinafore, and Y represents an alkylene radical containing from 7 to about 15 carbon atoms which together with the

C atom forms a monocyclic cycloalkylidene radical containing from 8 to about 16 ring carbon atoms. That is to say, Y represents the $(-CH_2-)_r$ radical wherein r is a positive integer having a value of from 7 to about 15.

The term monocyclic as used herein with respect to the cycloalkylidene radicals is meant to specify that the cycloalkylidene radicals contain only one ring, i.e., they are non-polycyclic. Thus, these non-polycyclic cyclaolkylidene radicals do not include those cyclic groups which are not monocyclic, e.g., bicyclic, bridged or fused cyclic structures such as 2-norbornylidene, bicyclo(3.3.0)octylene, and decahydronaphthylene.

Preferred polycarbonates, from the standpoint of exhibiting particularly improved heat resistance, are those containing at least one repeating structural unit represented by the general formula

II. 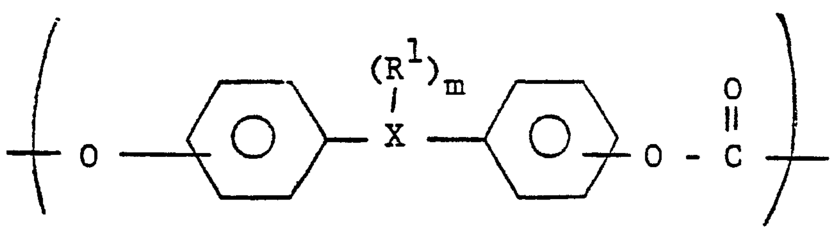

wherein:

$R^1$ is independently selected from monovalent hydrocarbon radicals;

X represents a monocyclic cycloalkylidene radical containing from 10 to about 16 ring carbon atoms; and

m is selected from a whole number having a value of from 0 up to the number of replaceable hydrogen atoms present on X.

These linear polycarbonates are derived from dihydric phenols of Formula I wherein n is zero and X represents a monocyclic cyclaolkylidene radical containing from 10 to about 16 ring carbon atoms, i.e., those dihydric phenols having the general formula

Ia. 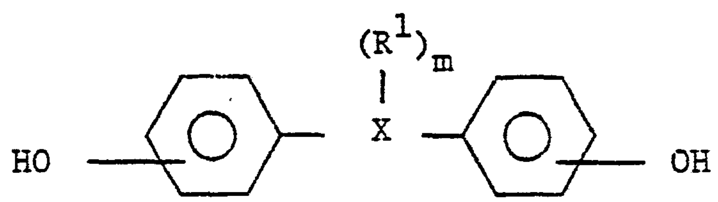

wherein $R^1$ and m are as defined hereinafore, and X is selected from monocyclic cycloalkylidene radicals containing from 10 to about 16 ring carbon atoms.

Preferred linear polycarbonates containing at least one recurring structural unit represented by Formula II are those wherein m in Formula II is zero. These polycarbonates are derived from dihydric phenols of Formula Ia wherein m is zero.

Preferred polycarbonates containing at least one recurring structural unit of Formula II wherein m is zero are those containing at least one repeating structural unit represented by the general formula

IIa. 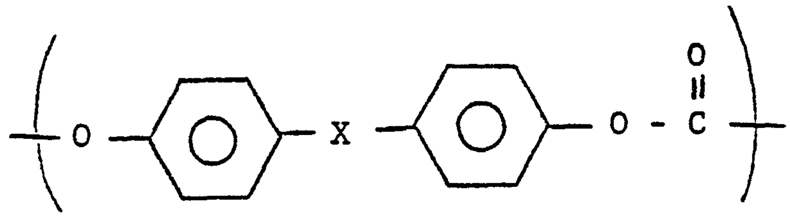

wherein X represents a monocyclic cycloalkylidene radical containing from 10 to about 16 ring carbon atoms. These linear polycarbonates are derived from dihydric phenols represented by the general formula

Ib. 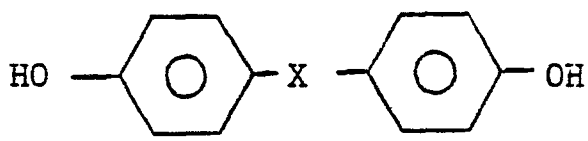

wherein X is selected from monocyclic cycloalkylidene radicals containing from 10 to about 16 ring carbon atoms.

Preferred linear polycarbonates of Formulae II and IIa are those wherein X is selected from monocyclic cycloalkylidene radicals containing from 11 to about 16 ring carbon atoms. These polycarbonates are derived from dihydric phenols of Formulae Ia and Ib, respectively, wherein X is selected from cycloalkylidene radicals containing from 11 to about 16 ring carbon atoms.

More preferred linear polycarbonates containing

at least one recurring structural unit of Formulae II and IIa are those wherein X is selected from monocyclic cycloalkylidene radicals containing from 12 to about 16 ring carbon atoms. These more preferred polycarbonates are derived from dihydric phenols of Formulae Ia and Ib, respectively, wherein X is selected from monocyclic cycloalkylidene radicals containing from 12 to about 16 ring carbon atoms.

Particularly useful linear polycarbonates containing at least one repeating structural unit represented by Formula II or by Formula IIa are those wherein X is selected from cycloalkylidene radicals containing from 12 to 14 ring carbon atoms. These polycarbonates are derived from dihydric phenols of Formulae Ia or Ib, respectively, wherein X is selected from cycloalkylidene radicals containing from 12 to 14 ring carbon atoms.

Some illustrative non-limiting examples of dihydric phenols of Formula Ib include:

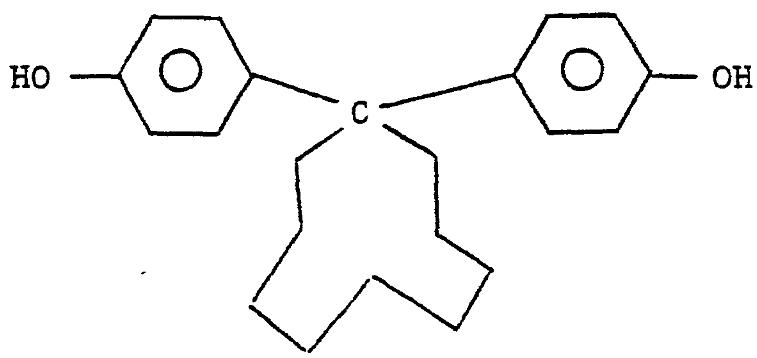 ;

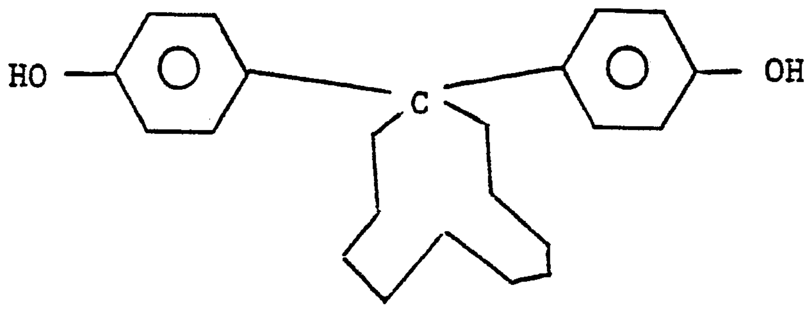

;

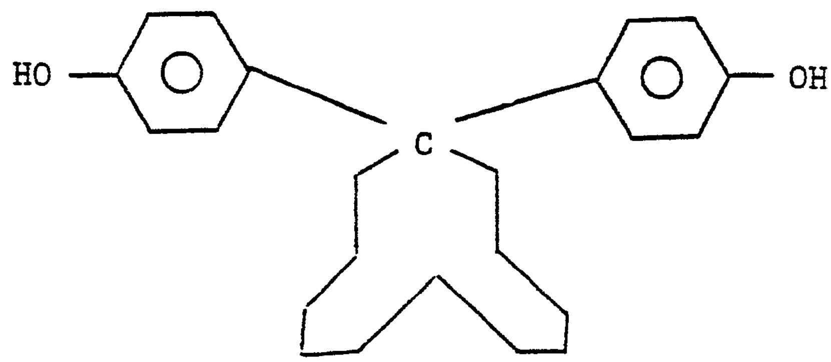

;

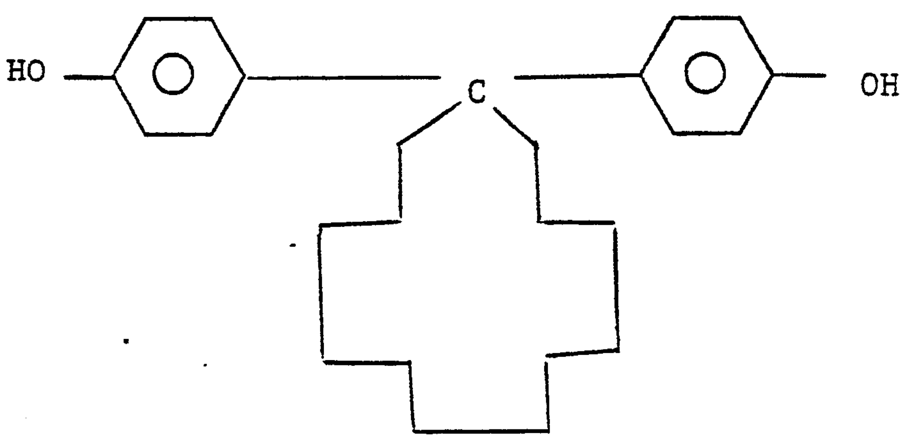

;

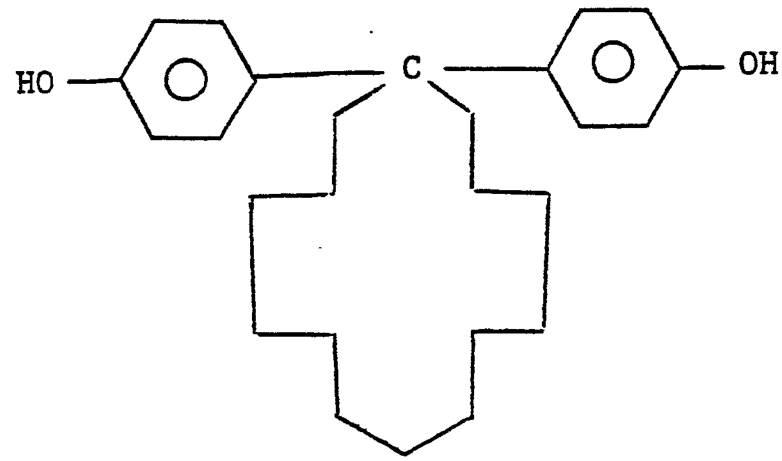

;

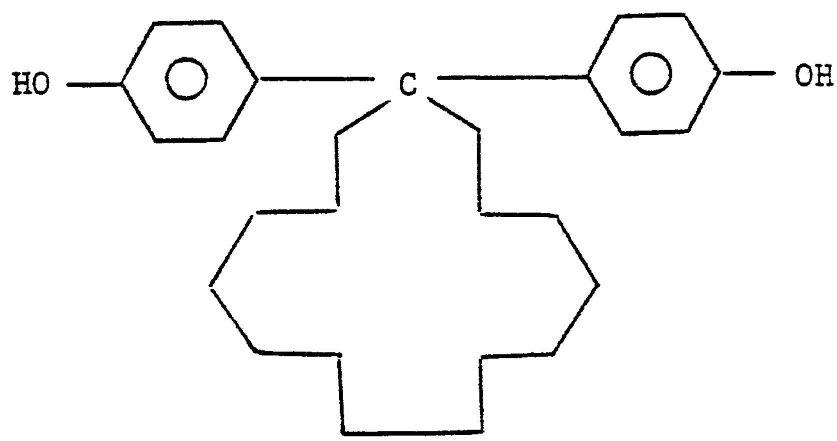

;

and

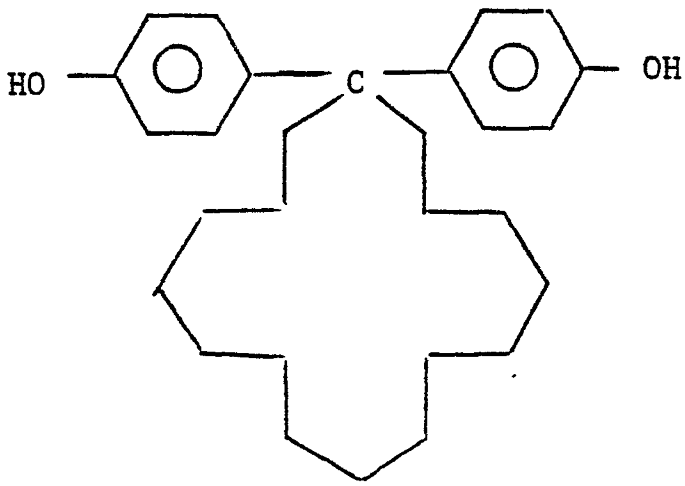 .

The novel dihydric phenols of Formula I, and particularly those of Formulae Ia and Ib, are prepared by the reaction of a particular ketone with a phenol in the presence of an acid catalyst, preferably in the presence of an acid catalyst and a cocatlyst such as butyl mercaptan.

The particular ketone reactant is selected from ketones represented by the general formula

III. 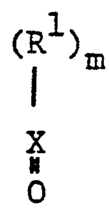

wherein $R^1$, m and X are as defined hereinafore. Preferred ketones are those wherein X represents a monocyclic cycloalkylidene radical containing from 10 to about 16 ring carbon atoms. More preferred ketones are those wherein X represents a cycloalkylidene radical containing from 11 to about 16 ring carbon atoms, while the most preferred ketones are those wherein X represents a cyclaolkylidene radical containing from 12 to about 16 ring carbon atoms.

More particularly, the ketone of Formula III may be represented by the general formula

IV. 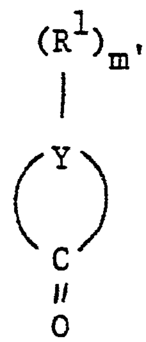

wherein $R^1$ is as defined hereinafore, Y is selected from alkylene radicals containing from 7 to about 15 carbon atoms which together with the $-\underset{\underset{O}{\|}}{C}-$ radical form a monocyclic structure containing from 8 to about 16 ring carbon atoms, and m' represents a whole number having a value of from 0 up to the number of hydrogen atoms present on Y for replacement.

The phenol reactants are selected from phenols represented by the general formula

V. 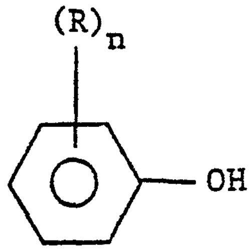

wherein R and n are as defined hereinafore.

The preferred phenol reactants of Formula V, from the standpoint of providing dihydric phenols which yield polycarbonates exhibiting particularly good heat resistances, are those wherein n is zero.

In order to obtain the novel dihydric phenols of Formula I, and particularly of Formulae Ia and Ib, one mole of the ketone of Formula IV is reacted with two moles of the phenol of Formula V in the presence of an acid catalyst, and preferably in the presence of an acid catalyst and a cocatalyst such as butyl mercaptan. Generally, the phenol reactant is present in excess. Rather than utilizing only one phenol reactant a mixture of two or more different phenol reactants may be employed.

Some illustrative non-limiting examples of suitable acid catalysts that may be employed include hydrochloric acid, hydrobromic acid, poly(styrene sulfonic acid), sulfuric acid, benzene sulfonic acid, and the like. The phenol of Formula V is reacted with the ketone of Formula IV under conditions of tempertaure and pressure, and in the presence of the

acid catalyst, such that coreaction between said phenol and said ketone will occur to form the dihydric phenol of Formula I, and more particularly of Formulae Ia and Ib. Generally, the reaction proceeds satisfactorily at about one atmosphere of pressure and at a temperature of from about room temperature (25°C) to about 100°C.

The amount of the acid catalyst employed is a catalytic amount. By catalytic amount is meant an amount effective to catalyze the reaction between the ketone and the phenol to produce the dihydric phenol. Generally, this amount is in the range of from about 0.1 to about 10 percent, by weight. However, in actual practice it is usually somewhat higher since the water coproduct formed in the reaction dilutes the acid catalyst and renders it somewhat less effective (slowing the reaction) than in its undiluted state.

In the preparation of the carbonate polymers of the instant invention only one dihydric phenol of Formula I may be employed, or a mixture of two or more different dihydric phenols of Formula I may be used.

The carbonate precursor that is reacted with the dihydric phenol of Formula I may be a carbonyl halide, a diaryl carbonate, or a bishaloformate. The preferred carbonate precursors are the carbonyl halides. The carbonyl halides are selected from carbonyl chloride,

 

carbonyl bromide, and mixtures thereof. The preferred carbonyl halide is carbonyl chloride, also known as phosgene.

The novel linear carbonate polymers of the instant invention contain at least one recurring structural unit represented by the general fromula

II. 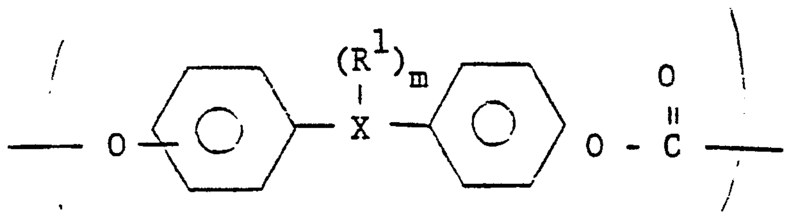

wherein $R^1$ and m are as defined hereinafore, and X is selected from monocyclic cycloalkylidene radicals containing from 10 to about 16 ring carbon atoms, preferably from 11 to about 16 ring carbon atoms, and more preferably from 12 to about 16 ring carbon atoms.

In order for the polycarbonates of the instant invention to exhibit improved heat resistances it is important that there be no alkyl substituent groups on the two aromatic residues. Thus, for example, if the polycarbonate is dialkyl substituted, i.e., there is present one alkyl group on each of the aromatic rings, its heat resistance will be inferior as compared to a similar polycarbonate which does not contain any

alkyl substituents of the aromatic rings.

These high molecular weight linear aromatic carbonate polymers generally have a number average molecular weight in the range of from about 5,000 to about 200,000, preferably in the range of from about 10,000 to about 100,000.

Also included herein are the linear thermoplastic randomly branched polycarbonates. These randomly branched polycarbonates may be prepared by coreacting (i) a carbonate precursor, (ii) at least one dihydric phenol of Formula I, and (iii) a minor amount of a polyfunctional organic compound. The polyfunctional organic compound is generally aromatic in nature and functions as a branching agent. This polyfunctional aromatic compound contains at least three functional groups selected from hydroxyl, carboxyl, haloformyl, carboxylic anhydride, and the like. Some typical polyfunctional aromatic compounds are disclosed in U.S. Patent Nos. 3,635,895 and 4,001,184, which are hereby incorporated herein by reference. Some illustrative non-limiting examples of these polyfunctional aromatic compounds include trimellitic anhydride, trimellitic acid, trimellityl trichloride, mellitic acid, and the like.

One method of preparing the high molecular weight linear aromatic carbonate polymers of the instant invention involves the heterogeneous interfacial polymerization system utilizing an aqueous caustic

solution, an organic water immiscible solvent such as methylene chloride, at least one dihydric phenol represented by the general Formula I, and preferably Ia or Ib, a carbonate precursor such as phosgene, a catalyst, and a molecular weight regulator.

Another useful method for preparing the linear carbonate polymers of the instant invention involves the use of an organic solvent system, such as pyridine, wherein said organic solvent system may also function as an acid acceptor, at least one dihydric phenol represented by Formula I, and preferably Formulae Ia or Ib, a molecular weight regulator, a catalyst, and a carbonate precursor such as phosgene.

The catalysts which are employed herein can be any of the suitable catalysts that aid the polymerization reaction of a dihydric phenol with a carbonate precusror such as phosgene to produce a polycarbonate. Suitable catalysts include, but are not limited to, tertiary amines such as triethylamine, quaternary ammonium compounds, and quaternary phosphonium compounds.

The molecular weight regulators employed may be any of the known compounds which regulate the molecular weight of the carbonate polymer by a chain terminating mechanism. These compounds include, but are not limited to, phenol, tertiary-butyl phenol, chroman-I, and the like.

The temperature at which the phosgenation reaction proceeds may vary from below 0°C to above 100°C. The reaction proceeds satisfactorily at temperatures from room temperature (25°C) to about 50°C. Since the reaction is exothermic, the rate of phosgene addition or the use of a low boiling solvent such as methylene chloride may be used to control the reaction temperature.

The carbonate polymers of the instant invention may optionally have admixed therewith certain commonly known and used additives such as antioxidants; antistatic agents; fillers such as glass fibers, mica, talc, clay, and the like; impact modifiers; ultraviolet radiation absorbers such as the benzophenones, benzotriazoles, cyanoacrylates, and the like; plasticizers; hydrolytic stabilizers such as the epoxides disclosed in U.S. Patent Nos. 3,489,716, 4,138,379 and 3,839,247, all of which are hereby incorporated herein by reference; color stabilizers such as the organophosphites disclosed in U.S. Patent Nos. 3,305,520 and 4,118,730, both of which are hereby incorporated herein by reference; flame retardants; and the like.

Some particularly useful flame retardants are the alkali and alkaline earth metal salts of sulfonic acids such as those disclosed, inter alia, in U.S. Patent Nos. 3,933,734; 3,948,851; 3,926,908; 3,916,167; 3,909,490; 3,853,396; 3,931,100; 3,978,024; 3,953,399; 3,917,559; 3,951,810; 3,940,366, 3,775,367 and 3,836,490, all of which are hereby incorporated by reference.

Particularly useful additives, from the standpoint of providing polycarbonates exhibiting improved heat resistance and good impact properties, are the impact modifiers. Thus, another embodiment of the instant invention is an impact modified linear polycarbonate composition comprised of, in physical admixture:

(i) at least one linear polycarbonate containing at least one recurring structural unit of Formula II, and preferably of Formula IIa; and

(ii) an impact modifier composition comprising an impact modifier which improves the impact properties of said polycarbonate, said impact modifier composition being present in quantities which are effective to improve the impact properties of said polycarbonate composition.

Generally, any material known to impact modify aromatic polycarbonates should be useful in upgrading the impact properties of the polycarbonates of this invention. Examples of these impact modifiers include, but are not limited to, the following general categories:

polyacrylates;
polyolefins;
rubbery dienic polymers; and
styrenic polymers.

The polyacrylates which may be employed as impact modifiers are rubbery homopolymers or copolymers. In general the polyalkyl acrylates described in Brinkman

et al., United States Patent 3,591,659, incorporated herein by reference, can be used, especially those containing units derived from alkyl acrylates, particularly n-butyl acrylate. Acrylate containing copolymers wherein the other monomer is, for example, derived from a methacrylate are also readily employable, see for example Japanese Patent Application Announcement 1968-18611, incorporated herein by reference. Preferably the acrylate resin will be in the form of a rubber-elastic graft copolymer having a glass transition temperature below about -20°C, preferably below about -40°C. Schlichting, United States Patent 4,022,748, incorporated herein by reference. More preferably, the acrylate resin will comprise a multiple stage polymer having a rubbery first stage (core) and a thermoplastic hard final stage (shell), see Farnham United States Patent 4,096,202, incorporated herein by reference.

The most preferred acrylate resin is a multiphase composite interpolymer comprised of a $C_1$-$C_5$ acrylate and a $C_1$-$C_5$ methacrylate. These interpolymers consist of about 25 to 95 weight percent of a first elastometic phase polymerized from a monomer system comprising about 75 to 99.8 weight percent of a $C_1$-$C_5$ alkyl acrylate, 0.1 to 5 percent by weight cross linking monomer, 0.1 to 5 percent by weight of graftlinking monomer, and about 75 to 5 weight percent of a final rigid thermoplastic phase polymerized in the presence of said elastomeric phase.

The crosslinking monomer is a polyethylenically unsaturated monomer having a plurality of addition polymerizable reactive groups all of which polymerize at substantially the same rate of reaction. Suitable crosslinking monomers include polyacrylic and polymethacrylic esters of polyols such as butylene diacrylate and dimethacrylate, trimethylol propane trimethacrylate, and the like; di and trivinyl benzene, vinyl acrylate and methacrylate, and the like. The preferred crosslinking monomer is butylene diacrylate.

The graftlinking monomer is a polyethylenically unsaturated monomer having a plurality of addition polymerizable reactive groups, at least one of which polymerizes at substantially different rates of polymerization from at least one other of said reactive groups. The function of the graftlinking monomer is to provide a residual level of unsaturation in the elastomeric phase, particularly in the latter stages of polymerization and, consequently, at or near the surface of the elastomer particles.

When the rigid thermoplastic phase is subsequently polymerized at the surface of the elastomer, the residual unsaturated addition polymerizable reactive group contributed by the graftlinking monomer participates in the subsequent reaction so that at least a portion of the rigid phase is chemically attached to the surface of the elastomer.

Among the effective graftlinking monomers are alkyl group-containing monomers of alkyl esters of ethylenically unsaturated acids such as allyl acrylate, allyl methacrylate, diallyl maleate, diallyl fumarate, and allyl acid itaconate. Somewhat less preferred are the diallyl esters of polycarboxylic acids which do not contain polymerizable unstauration. The preferred graftlinking monomers are allyl methacrylate and diallyl maleate.

A most preferred interpolymer has only two stages, a first stage comprising about 60 to 95 percent be weight of the interpolymer and being polymerized from a monomer system comprising 95 to 99.8 percent by weight butyl acrylate, 0.1 to 2.5 percent by weight butylene diacrylate as crosslinking agent, 0.1 to 2.5 percent by weight allyl methacrylate or dially maleate as a graftlinking agent, with a final stage polymerized from about 60 to 100 percent by weight methyl methacrylate. The multiphase composite interpolymer Acryloid KM-330 available from Rohm and Haas is preferred. This interpolymer is comprised of small quantities of cross linking and graft monomers, about 80 weight percent n-butyl acrylate and about 20 weight percent methyl methacrylate.

The polyolefins which can be employed as impact modifiers are homopolymers or copolymers. Examples of homopolymers include polyethylene,

polypropylene, polybutene-1, polyhexene and the like. The polymers include the standard high density polymers, low density polymers as well as the new linear low density polyolefins such as the linear low density polyethylene made with butene-1 or octene-1. Other examples of copolymers containing at least one olefin monomer can be employed. For example, copolymers of ethylene and propylene can be employed as the impact modifier as well as a copolymer of an olefin and an acrylate such as ethylene ethyl acrylate, a copolymer available from Union Carbide as DPD-6169. Other higher olefin monomers can be employed as copolymers with alkyl acrylates, for example propylene and n-butyl acrylate and the like. These polyolefin polymers can also be reacted with rubbery dienes so as to form terpolymers of the EPDM family such as ethylene propylene diene terpolymers, for example Epsyn 704 available from Copolymer Rubber.

Various rubbery polymers can also be employed as impact modifiers. Examples of such rubbery polymers include polybutadiene, polyisoprene, styrene-butadiene and various other copolymers having a rubbery dienec comonomer.

Styrene containing polymers can also be employed as impact modifiers. Examples of such polymers include acrylonitrile-butadiene-styrene, styrene acrylonitrile, acrylonitrile-butadiene-alphamethylstyrene, methacrylate-butadiene-styrene and other high impact styrene containing polymers.

Other known impact modifiers include various elastomeric materials such as organic silicone rubbers, organic silicone polysiloxane polymers, polysiloxane-polycarbonate block copolymers, elastomeric fluorohydrocarbonas, elastomeric polyesters, and the like.

Generally any minimum quantity of impact modifier which positively upgrades the impact strength of the polycarbonates of the instant invention can be employed. Greater than this minimum quantity may be employed as long as the properties desired for a particular application of the polycarbonate are substantially maintained. Generally a minimum of about two weight percent is sufficient to observe an increase in the impact strength. A minimum of about four weight percent is preferred. A level of about fifteen weight percent should generally not be exceeded, preferably about 10 weight percent. Weight percent is measured as the amount of the impact modifier in the total of impact modifier plus the aromatic polycarbonate resin of this invention.

The impact modified compositions of this invention may be compounded in the usual manner, for example by blending the resin with the impact

modifier in dry form, for example powder or granules and the like, and then extruding the composition.

Another embodiment of the instant invention is a carbonate copolymer obtained by reacting (i) a carbonate precursor, (ii) at least one dihydric phenol of Formula I, preferably Ia, and more preferably Ib, and (iii) at least one dihydric phenol represented by the general formula

VI. 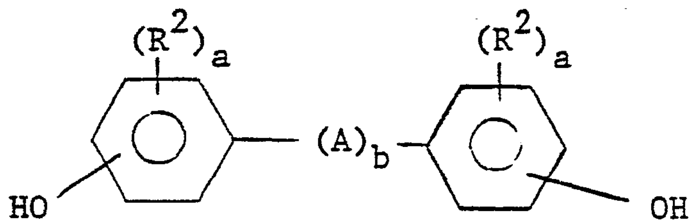

wherein:

$R^2$ is independently selected from halogen radicals, monovalent hydrocarbon radicals, and monovalent hydrocarbonoxy radicals;

a is independently selected from whole numbers having a value of from 0 to 4 inclusive;

A is selected from alkylene radicals, alkylidene radicals, cycloalkylene and cycloalkylidene radicals containing from 4 to 6 ring carbon atoms, -S-, -S-S-, $-\overset{O}{\overset{\|}{C}}-$, $-\overset{O}{\overset{\|}{S}}-$, -O-, and $-\overset{O}{\overset{\|}{\underset{\underset{O}{\|}}{S}}}-$;

b is either zero or one.

The preferred halogen radicals represented by $R^2$ are chlorine and bromine.

The monovalent hydrocarbon radicals represented by $R^2$ are the alkyl radicals, the aryl radicals, the aralkyl radicals, the alkaryl radicals, and the cycloalkyl radicals. The preferred alkyl radicals represented by $R^2$ are those containing from 1 to about 8 carbon atoms. Some illustrative non-limiting examples of these alkyl radicals include methyl, ethyl, propyl, isopropyl, butyl, isobutyl, tertiary butyl, pentyl, neopentyl, and the like. The preferred aryl radicals represented by $R^2$ are those containing from 6 to 12 carbon atoms, i.e., pehnyl, naphthyl and biphenyl. The preferred aralkyl radicals and alkaryl radicals represented by $R^2$ are those containing from 7 to about 14 carbon atoms. Some illustrative non-limiting examples of these aralkyl and alkaryl radicals include benzyl, tolyl, ethylphenyl, and the like. The preferred cycloalkyl radicals represented by $R^2$ are those containing from 4 to about 6 ring carbon atoms and include cyclobutyl, cyclopentyl, cyclohexyl, methycyclohexyl, and the like.

The monovalent hydrocarbonoxy radicals represented by $R^2$ are preferably selected from alkoxy radicals and aryloxy radicals. The preferred alkoxy radicals represented by $R^2$ are those containing from 1 to about 8 carbon atoms. Some illustrative non-limiting examples of these alkoxy radicals include methoxy, butoxy, isopropxy, propoxy, and

the like. The preferred aryloxy radical is phenoxy.

Preferably $R^2$ is independently selected from monovalent hydrocarbon radicals, with the alkyl radicals being preferred monovalent hydrocarbon radicals.

The preferred alkylene radicals represented by A are those containing from 2 to about 6 carbon atoms. Some illustrative non-limiting examples of these alkylene radicals include ethylene, propylene, butylene, and the like. The preferred alkylidene radicals represented by A are those containing from 1 to about 6 carbon atoms. Some illustartive non-limiting examples of these alkylidene radicals include ethylidene, 1,1-propylidene, 2,2-propylidene, and the like.

The preferred dihydric phenols of Formula VI are those wherein b is one an A is selected from alkylene or alkylidene radicals.

In the dihydric phenol of Formula VI when more than one $R^2$ substituent is present on the aromatic nuclear residue they may be the same or different.

The more preferred dihydric phenols of Formula VI are the 4,4'-bisphenols.

The dihydric phenols of Formula VI are well known in the art and are generally commercially available or may readily be prepared by known methods. These phenols are generally used in preparing conventional prior art polycarbonate resins.

Some non-limiting illustrative examples of the dihydric phenols of Formula VI include:
2,2-bis(4-hydroxyphenyl)propane (bisphenol-A);
1,1-bis(3-methyl-4-hydroxyphenyl)propane;
2,2-bis(3,5-dimethyl-4-hydroxyphenyl)propane;
bis(4-hydroxyphenyl)sulfide;
3,3-bis(3-methyl-4-hydroxyphenyl)pentane;
3,3'-diethyl-4,4'-dihydroxydiphenyl; and the like.

The amount of the dihydric phenol of Formula I, preferably Ia, and more preferably Ib, utilized in this embodiment is an amount effective to improve the heat resistance, e.g., glass transition temperature, of the carbonate copolymers. Generally, this amount is in the range of from about 5 to about 90 weight percent, and preferably from about 10 to about 80 weight percent, based on the total amount of dihydric phenols of Formula I, preferably Formula Ia, and more perferably Formula Ib, and Formula VI employed.

The preferred dihydric phenol of Formula VI is 2,2-bis(4-hydroxyphenyl)propane.

The carbonate copolymers obtained by reacting (i) a carbonate precursor, (ii) at least one dihydric phenol of Formula I, preferably Formula Ia, and more preferably Ib, and (iii) at least one dihydric phenol of Formula VI contain at least the following repeating structural units:

II; and

VII. 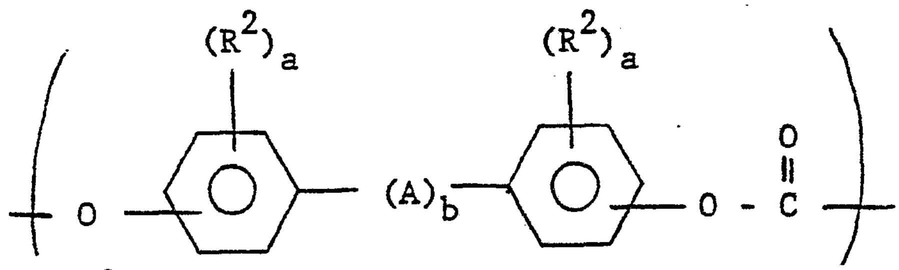

wherein $R^2$, A, a and b are as defined hereinafore.

In the practice of this embodiment of the instant invention only one dihydric phenol of Formula VI may be employed or a mixture of two or more different dihydric phenols of Formula VI may be utilized.

The procedures for preparing the copolymers of this embodiment are generally similar to those used for preparing the polycarbonates of the instant invention as described hereinafore. The instant carbonate copolymers may optionally have admixed therewith the various additives described hereinafore; particularly an impact modifying amount of at least one impact modifier of the type described hereinafore. The amounts of these impact modifiers necessary to improve the impact properties of the compositions containing these carbonate copolymers are generally the same as described for the polycarbonate compositions supra.

Yet another embodiment of the instant invention is a polycarbonate resin blend comprised of (i) at least one polycarbonate resin derived from (i) at least one dihydric phenol of Formula I, preferably Formula Ia, and more preferably Formula Ib, and (b)

a carbonate precursor (hereinafter referred to as resin A); and (ii) at least one conventional polycarbonate resin derived from (a) at least one dihydric phenol of Formula VI, and (b) a carbonate precursor (hereinafter referred to as resin B). These blends contain an amount of resin A effective to improve the heat resistance of said blends. Generally, this amount is in the range of from about 5 to about 90 weight percnt, preferably from about 10 to about 80 weight percent of resin A, based on the total amount of resins A and B present in the blends.

The blends of the instant invention may optionally have admixed the aforedescribed additives; particularly an impact modifying amount of at least one impact modifier of the type described hereinafore. The amounts of these impact modifiers necessary to improve the impact properties of these blends are generally the same as described for the polycarbonate compositions supra.

The instant blends may generally be prepared by first preforming the resins A and B and thereafter physically mixing or blending these resins together.

Still another embodiment of the instant invention are copolyester-carbonates derived from (i) a carbonate precursor, (ii) at least one dihydric phenol represented by Formula I, preferably Formula Ia, and more preferably Formula Ib, and (iii) at least one difunctional carboxylic acid or an ester

forming reactive derivative thereof.

Briefly stated, the copolyester-carbonates comprise recurring carbonate groups, carboxylate groups, and aromatic carbocyclic groups in the linear polymer chain, in which at least some of the carboxylate groups and at least some of the carbonate groups are bonded directly to the ring carbon atoms of the aromatic carbocyclic groups.

These copolyester-carbonates contain ester bonds and carbonate bonds in the polymer chain, wherein the amount of the ester bonds is in the range of from about 25 to about 90 mole %, preferably from about 35 to about 80 mole %. For example, 5 moles of bisphenol-A reacting completely with 4 moles of isophthaloyl dichloride and 1 mole of phosgene would give a copolyester-carbonate of 80 mole % ester bonds.

Conventional copolyester-carbonates in general, and methods for their preparation, are disclosed in U.S. Patent 3,169,121, which is hereby incorporated by reference.

In general, any difunctional carboxylic acid conventionally used in the preparation of linear polyesters may be utilized in the preparation of the linear copolyester-carbonate resins of the present invention. The carboxylic acids which may be used include the aliphatic carboxylic acids, aliphatic-aromatic carboxylic acids, and aromatic carboxylic acids. These acids are disclosed in the

aforementioned U.S. Patent 3,169,121.

The difunctional carboxylic acids which may be utilized in the preparation of the linear copolyester-carbonate resins of the instant invention generally conform to the general formula

VIII. $$R^3 - (R^4)_q - COOH$$

wherein $R^4$ is an alkylene, alkylidene, aralkylene, aralkylidene or cycloaliphatic group containing ethylenic unsaturation; an aromatic group such as phenylene, biphenylene, substituted phenylene, and the like; two or more aromatic groups connected through non-aromatic linkages such as alkylene or alkylidene groups; and the like. $R^3$ is either a carboxyl group or a hydroxyl group. The letter q represents one where $R^3$ is a hydroxyl group and either zero or one where $R^3$ is a carboxyl group.

Preferred difunctional carboxylic acids are the aromatic difunctional carboxylic acids, i.e., those acids of Formula VIII where q is one, $R^3$ is a carboxyl or a hydroxyl group, and $R^4$ is an aromatic group such as phenylene, naphthylene, biphenylene, substituted phenylene, and the like. The preferred aromatic difunctional carboxylic acids are those represented by the general formula

IX. 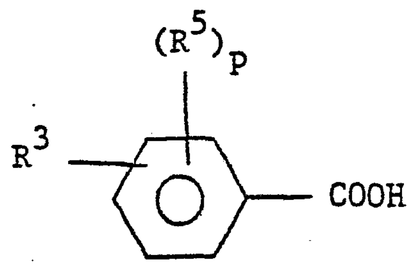

wherein $R^3$ is as defined hereinafore, $R^5$ is independently selected from halogen radicals, monovalent hydrocarbon radicals, and monovalent hydrocarbonoxy radicals, and p represents a whole number having a value of from 0 to 4 inclusive.

The preferred halogen radicals represented by $R^5$ are chlorine and bromine. The monovalent hydrocarbon radicals represented by $R^5$ are selected from alkyl radicals, aryl radicals, alkaryl radicals, aralkyl radicals, and cycloalkyl radicals. The preferred alkyl radicals, aryl radicals, alkaryl radicals, aralkyl radicals and cyclaolkyl radicals are the same as those defined for R hereinafore. The monovalent hydrocarbonoxy radicals represented by $R^5$ are selected from alkoxy radicals and aryloxy radicals. The preferred alkoxy radicals and aryloxy radicals represented by $R^5$ are the same as those defined by R hereinafore.

Preferred radicals represented by $R^5$ are the monovalent hydrocarbon radicals, with the alkyl radicals being the preferred monovalent hydrocarbon radicals.

Mixtures of two or more different difunctional acids may be employed as well as single individual difunctional carboxylic acids. Therefore, where the term difunctional carboxylic acid is used herein it is meant to include mixtures of two or more different difunctional carboxylic acids as well as single difunctional carboxylic acids.

Particularly useful aromatic difunctional carboxylic acids are isophthalic acid, terephthalic acid, and mixtures thereof. A particularly useful mixture of isophthalic acid and terephthalic acid is one wherein the weight ratio of isophthalic acid to terephthalic acid is in the range of from 1:10 to 9.8:0.2.

Rather than utilizing the difunctional carboxylic acids per se it is preferred to employ their ester forming reactive derivatives such as, for example, the acid halides. Particularly useful acid halides are the acid chlorides. Thus, for example, instead of using isophthalic acid, terephthalic acid, or mixtures thereof it is preferred to utilize isophthaloyl dichloride, terephthaloyl dichloride, or mixtures thereof.

One of the methods for preparing the copolyester-carbonates of the instant invention involves the heterogeneous intefacial polymerization system utilizing an aqueous caustic solution, an organic water immiscible solvent, at least one

dihydric phenol represented by Formula I, preferably by Formula Ia, and more preferably by Formula Ib, at least one difunctional carboxylic acid or a reactive derivative thereof, a catalyst, a molecular weight regulator, and a carbonate precursor. A preferred heterogeneous interfacial polymerization system is one which utilizes phosgene as the carbonate precursor and methylene chloride or chlorobenzene as the organic solvent.

The reaction conditions, catalysts, and chain terminators or molecular weight regulators utilized are generally the same as those described hereinafore for the preparation of the polycarbonates of the instant invention.

The linear copolyester-carbonate resins of the instant invention may also optionally contain admixed therewith the various additives described supra, particularly an impact modifying amount of at least one impact modifier of the type described hereinafore. The amount of the impact modifier necessary to improve the impact properties of the instant copolyester-carbonates is generally the same as described hereinafore for the polycarbonates of the instant invention.

Another embodiment of the instant invention is a copolyester-carbonate resin derived from (i) a carbonate precursor, (ii) at least one difunctional carboxylic acid or a reactive derivative thereof, (iii) at least one dihydric phenol of Formula I, preferably of Formula Ia, and more preferably of

Formula Ib, and (iv) at least one dihydric phenol of Formula VI. In this linear copolyester-carbonate resin the amount of the dihydric phenol of Formula I, preferably Formula Ia, and more preferably Formula Ib, employed is an amount effective to improve the heat resistance of the resin. Generally, this amount is in the range of from about 5 to about 90 weight percent, preferably from about 10 to about 80 weight percent, based on the amount of dihydric phenols of Formula I, preferably Formula Ia, and more preferably of Formula Ib and Formula VI present.

These resins may also optionally have admixed therewith the aforedescribed additives, particularly an impact modifying amount of an impact modifier of the type described hereinafore. In gemeral, the amount of impact modifier necessary to improve the impact properties of said copolyester-carbonate resin is the same as that described for the polycarbonates hereinafore.

Still another embodiment of the instant invention is a linear copolyester-carbonate blend comprised of (i) at least one linear copolyester-carbonate resin of the instant invention, i.e., one derived from (a) a carbonate precursor, (b) at least one difunctional carboxylic acid or a reactive derivative thereof, and (c) at least one dihydric phenol of Formula I, prefereably Formula Ia, and more preferably Formula Ib (hereinafter referred to as copolyester-carbonate resins C); and (ii) at least one conventional copolyester-carbonate resin which is derived from (a) a carbonate precursor, (b) at least one difunctional carboxylic acid or a reactive derivative thereof, and (c) at least one dihydric phenol of Formula VI (hereinafter referred to as copolyester-carbonate resin D).

The blends of this embodiment contain an amount of resin C effective to improve the heat resistance of the blends. Generally this amount is in the range of from about 5 to about 90 weight percent, preferably from about 10 to about 80 weight percent, based on the amount of copolyester-carbonate resins C and D present in the blends.

These blends may also optionally contain the various aforedescribed additives, particularly an impact modifying amount of at least one impact modifier of the type described hereinafore. The amount of impact modifier necessary to improve the impact properties of these blends is generally the same as that described hereinafore for the polycarbonates of the instant invention.

Also included within the scope of the instant linear copolyester-carbonates are the linear randomly branched thermoplastic copolyester-carbonates. These branched copolyester-carbonates may be prepared by the use of the branching agents described hereinafore for the preparation of the randomly branched polycarbonates.

The term linear polycarbonate resins, as used with respect to the polycarbonates of the instant invention, includes both the branched polycarbonates of the instant invention and the non-branched polycarbonates of the instant invention.

Likewise, the term linear copolyester-carbonates, as used with respect to the copolyester-carbonates of the instant invention, includes both the branched copolyester-carbonates of the instant invention and the non-branched copolyester-carbonates of the instant invention.

Also included within the scope of the instant invention are blends of the copolyester-carbonates of the instant invention (copolyester-carbonate resins C) with the polycarbonates of the instant invention (polycarbonate resins A); blends of copolyester-carbonates of the instant invention (copolyester-carbonate resins C) with conventional polycarbonates (polycarbonate resins B); and blends of polycarbonates of the instant invention (polycarbonate resins A) with conventional copolyester-carbonates (copolyester-carbonate resins D).

These blends generally contain from about 1 to about 99 weight percent of the copolyester-carbonate resin and from about 99 to about 1 weight percent polycarbonate resin, preferably from about 5 to about 95 weight percent copolyester-carbonate and from about 95 to about 5 weight percent polycarbonate. These blends may contain the additives set forth hereinafore, particularly an impact modifying amount of an impact modifier as disclosed supra.

The high molecular weight linear aromatic copolyester-carbonates of the instant invention generally have a number average molecular weight in the range of from about 5,000 to about 200,000, preferably in the range of from about 10,000 to about 100,000.

DESCRIPTION OF THE PREFERRED EMBODIMENT

In order to more fully and clearly illustrate the present invention the following examples are set forth. It is intended that the examples be considered as illustrative rather than limiting the invention as disclosed and claimed herein. In the examples all parts and percents are on a weight basis unless otherwise indicated.

The following examples illustrate polycarbonates falling outside the scope of the instant invention and are presented for comparative purposes only.

EXAMPLE 1

This example illustrates the preparation of a bisphenol-A type polycarbonate.

Into a mixture of 2283 grams of pure 4,4'-isopropylidenebisphenol (bisphenol-A) (mp 156-157°C; 10.0 mole grams), 5700 grams water, 9275 grams methylene chloride, 32 grams phenol, and 10.0 grams of triethylamine were introduced, at ambient temperature, 1180 grams phosgene over a period of 97 minutes while maintaining the pH of the two phase system at about 11, i.e., pH 10-12.5, by simultaneously adding a 25% aqueous sodium hydroxide solution. At the end of the addition period

the pH of the aqueous phase was 11.7 and the bisphenol-A content of this phase was less than 1 part per million (ppm) as determined by ultraviolet analysis.

The methylene chloride phase was separated from the aqueous phase, washed with an excess of dilute (0.01N) aqueous HCl and then washed three times with deionized water. The polymer was precipitated by steam and dried at 95°C. The resultant, pure bisphenol-A polycarbonate, which had an intrinsic viscosity (IV) in methylene chloride at 25°C of 0.572 dl/gm., was fed to an extruder, which extruder was operated at about 550°F, and the extrudate was comminuted into pellets.

The pellets were then injection molded at about 600°F into test bars of about 5" x 1/2" x 1/16" thick. The DTUL of the test bars was determined to be 128°C. The Tg of this polycarbonate was 149°C.

The second order glass transition temperature is determined using a Perkins-Elmer DSC-2B instrument which measures the second order glass transition temperature (Tg) by differential scanning calorimetry. The Tg is an indication of the heat resistance of the polymer. Generally, the higher the Tg the more heat resistant is the polymer.

EXAMPLE 2

This example illustrates the preparation of

a dimethyl substituted cyclododecylidene polycarbonate falling outside the scope of the instant invention.

Into a slurry of 9.5 grams (0.025 mole) of 1,1-bis(3-methy-4-hydroxyphenyl)cyclododecane (m.p. 205-206°C), 0.1 milliliter of thriethylamine, 0.02 gram (1 mole %) of phenol, 200 milliliters of methylene chloride, and 150 milliliters of water there is added sufficient aqueous sodium hydroxide solution to bring the pH to 11.0. Phosgene is then introduced into this reaction mixture at a rate of 0.5 gram per minute for a period of 10 minutes while maintaining the pH of the reaction mixture at 10.5-11.4 by the addition of the aqueous caustic solution. After addition of the phosgene ceases the methylene chloride phase is separated from the aqueous phase, washed with an excess of dilute (0.01N) HCl, and is then washed three times with deionized water. The polymer is then precipitated with methanol and dried at 95°C. The Tg of this polymer is determined to be 202°C.

## EXAMPLE 3

This example illustrates the preparation of a cyclohexylidene polycarbonate falling outside the scope of the instant invention.

To a reactor vessel is added an aqueous caustic solution of 26.8 grams (0.1 mole) of

1,1-bis(4-hydroxyphenyl)cyclohexane, 8 grams of sodium hydroxide, 170 milliliters of water, followed by the addition of 0.3 milliliter of triethylamine and 400 milliliters of methylene chloride. Phosgene is introduced into this well stirred mixture at a rate of 0.5 gram per minute for a period of 10 minutes while maintaining the pH at 12.4 by the use of 25% aqueous sodium hydroxide solution. The pH is then lowered to 11 and additional phosgene is introduced into the reaction mixture at a rate of 0.5 gram per minute for 32 minutes. After the addition of the phosgene ceases the methylene chloride phase is separated from the aqueous phase, washed with an excess of dilute (0.01N) HCl, and is then washed three times with deionized water. The polymer is precipitated with methanol and dried at 95°C. The Tg of this polymer is determined to be 171°C.

EXAMPLE 4

This example illustrates the preparation of a dialkylated cyclohexylidene polycarbonate falling outside the scope of the instant invention.

To a reactor vessel are introduced 2965 grams (10 moles) of 1,1-bis(3-methyl-4-hydroxyphenyl) cyclohexane, 7 liters of methylene chloride, 5.5 liters of water, 28 milliliters of triethylamine, and 32.9 grams of phenol. Sufficient 25% aqueous sodium hydroxide solution is added to this reaction mixture to maintain a pH of about 11. Phosgene

is then introduced into the reaction mixture at a rate of 36 grams per minute for a period of 32 minutes while maintaining the pH at about 11 by the use of the aqueous caustic solution. After addition of the phosgene ceases the methylene chloride phase is separated from the aqueous phase, washed with dilute (0.01N) HCl, and then washed three times with deionized water. The polymer is then precipitated by steam and dried at 95°C. The Tg of this polymer is determined to be 132°C.

## EXAMPLE 5

This example illustrates the preparation of a dialkyl substituted cyclopentadecylidene polycarbonate falling outside the scope of the instant invention.

Into a reaction mixture containing 5 grams (0.0118 mole) of 1,1-bis(3-methyl-4-hydroxyphenyl) cyclopentadecane (m.p. 213-214°C), 0.033 milliliter of triethylamine, 400 milliliters of methylene chloride, and 300 milliliters of water, there is added sufficient 25° aqueous sodium hydroxide solution to bring the pH of the reaction mixture to about 11. Phosgene is then introduced into this well stirred reaction mixture at a rate of 0.5 gram per minute for a period of 6.5 minutes while maintaining the pH at about 11 by the use of the

aqueous caustic solution. After the addition of the phosgene ceases the reaction mixture is stirred for 5 minutes, the methylene chloride phase is separated from the aqueous phase, and is washed once with an excess of dilute (0.01N) HCl and three times with deionized water. The polymer is then precipitated with methanol and dried at 95°C. The Tg of this polymer is determined to be 159°C.

## EXAMPLE 6

This examples illustrates the preparation of a 4,4'-cyclooctylidene bisphenol polycarbonate falling outside the scope of the instant invention.

Into a solution containing 4 grams (0.0135 mole) of 1,1-bis(4-hydroxyphenyl)cyclooctane (m. p. 197-199°C) and 100 milliliters of pyridine, there is introduced phosgene at a rate of 0.2 gram per minute for a period of 20 minutes. During the phosgene addition period the originally colorless solution turns a muddy green color. After the phosgene addition ceases the reaction mixture is stirred for 10 minutes. The reaction mixture is then added to an excess of methanol and stirred in a Warring blender. The precipitated polymer is filtered, and the filter cake is then slurried with water, filtered and washed. The filter cake is dried in a vacuum oven at 50°C. The resultant

polycarbonate is found to have an intrinsic viscosity (IV) in methylene chloride at 25°C of 0.427 dl/gm. This polymer has a second order glass transition temperature, Tg, of 145°C.

The following example illustrates a conventional copolyester-carbonate resin falling outside the scope of the instant invention. This example is presented for comparative purposes only.

EXAMPLE 7

To a reactor vessel were added 400 milliliters of methylene chloride, 300 milliliters of water, 34.2 grams of bisphenol-A, 0.35 gram of phenol, and 0.42 milliliter of triethylamine. At a pH of about 11, 7.6 grams of isophthaloyl dichloride dissolved in methylene chloride, 10 milliliters, were added over a 15 minute period, while maintaining the pH at about 11 by the addition of 35% aqueous caustic. After the addition of the isophthaloyl dichloride was terminated 6 grams of phosgene were introduced over a 15 minute period, while controlling the pH at about 11 by the addition of 35% aqueous caustic solution. The polymer mixture was diluted with methylene chloride and the brine phase was separated. The resulting polymer containing phase was washed with HCl and then with water, and the polymer was then recovered

by methanol precipitation. The resultant copolyester-carbonate was found to have an intrinsic viscosity of 0.530 dl/gm and a Tg of 162.2°C.

The following examples illustrate the preparation of the non-alkyl substituted cycloalkylidene bisphenols of the instant invention.

EXAMPLE 8

This example illustrates the preparation of 4,4'-cyclododecylidenebisphenol.

To a 3 liter round bottom flask equipped with a stirrer, reflux condenser, thermometer and gas inlet tube, were charged 1647 grams (17.5 moles) of phenol, 478 grams (2.62 moles) of cyclododecanone, and 15 milliliters of n-butyl mercaptan. Heat was applied via a heating mantel and when the reaction mixture became liquid at 58°C anhydrous hydrogen chloride was introduced until the solution became saturated. Stirring was continued between 52 and 60°C for several hours, during which period white solids began to separate out from the reddish-orange reaction mixture. When gas chromatographic analysis of samples taken from the slurry indicated the absence of macrocyclic ketone, the warm reaction mixture was filtered by suction and the resultant filter cake was washed with methylene chloride in order to remove much of the excess phenol. The filter cake was then slurried up with fresh methylene

chloride, filtered and rinsed again with more solvent. Analysis by gas chromatography of the dried filter cake, which weighed 849.8 grams (2.41 moles), corresponding to a 92% yield, and melted at 207-208.5°C, indicated that it was 99.9% pure and that it had a retention time of 26.07 minutes relative to p-cumylphenol, which emerged at 13.91 minutes.

EXAMPLE 9

This example illustrates the preparation of 1,1-bis(4-hydroxyphenyl)cyclodecane.

Into a solution of 1.04 grams (0.0067 mole) of cyclodecanone, 4.12 grams (0.044 mole) of phenol, 1 milliliter of methylene chloride, and 0.04 milliliter of n-butyl mercaptan there is introduced, with stirring, anhydrous hydrogen chloride gas while maintaining the temperature of the reaction mixture at about 14-16°C. Solids begin to separate out from the reaction mixture and when the reaction mixture becomes too thick to stir an additional 8 milliliters of methylene chloride are added. The reaction is followed by gas chromatographic analysis of samples removed from the reaction mixture. When gas chromatographic analysis of the samples indicates the absence of the macrocyclic ketone the reaction is terminated. Analysis of the resultant 1,1-bis(4-hydroxyphenyl)cyclodecane

shows that it has a retention time of 28.0 minutes relative to p-cumylphenol which emerges at 16.91 minutes.

EXAMPLE 10

This example illustrates the preparation of 1,1-bis(4-hydroxyphenyl)cycloundecane.

Into a solution of 1 gram (0.006 mole) of cycloundecanone, 3.8 grams (0.04 mole) of phenol, 2 milliliters of methylene chloride, and 0.1 milliliter of n-butyl mercaptan there is introduced, with stirring, anhydrous hydrogen chloride gas while maintaining the temperature of the reaction mixture at about 14-16°C. Solids begin to separate out from the reaction mixture and when the reaction mixture becomes too thick to stir additional methylene chloride is added. The reaction is followed by gas chromatographic analysis of samples removed from the reaction mixture. When gas chromatographic analysis of the samples indicates the absence of the macrocyclic ketone the reaction mixture is filtered by suction and the solids are washed with methylene chloride. The solids are recrystallized from aqueous methanol. Analysis by gas chromatography of the white crystals, which melt at 183-184°C, shows that they have a retention time of 25.57 minutes relative to p-cumyl phenol which emerges at 14.04 minutes.

EXAMPLE 11

This example illustrates the preparation of 1,1-bis(4-hydroxyphenyl)cyclopentadecane.

Into a warm reaction mixture, kept at about 48°C, consisting of 5 grams (0.0223 mole) of cyclopentadecanone, 47.1 grams (0.5 mole) phenol, and 0.5 milliliter of n-butyl mercaptan there is introduced anhydrous hydrogen chloride gas while maintaining the temperature at about 48°C. Solids begin to separate out of the liquid phase. The reaction is followed by gas chromatographic analysis of samples removed from the reaction mixture. When gas chromatographic analysis of these samples indicates the absence of the macrocyclic ketone the reaction mixture is filtered and the solids are washed with methylene chloride. The solids are then recrystallized from aqueous methanol to yield the pure bisphenol. Analysis by gas chromatography of the solids, which melt at 229-230.5°C, shows that they have a retention time of 30.00 minutes relative to p-cumyl phenol which emerges at 15.83 minutes.

The following examples illustrate the polymers of the instant invention.

EXAMPLE 12

This example illustrates the preparation of a polycarbonate derived from 1,1-bis(4-hydroxyphenyl)cyclododecane.

Into a slurry of 35.2 grams (0.10 mole) of 1,1-bis(4-hydroxyphenyl)cyclododecane, 0.4 milliliter of triethylamine, 0.06 gram (0.25 mole %) of phenol, 400 milliliters of methylene chloride, and 300 milliliters of water there was added sufficient 25% aqueous sodium hydroxide solution to bring the pH to 13. Phosgene was then introduced into this reaction mixture at the rate of 0.5 gram per minute for a period of 25 minutes while maintaining the pH of the reaction mixture at 10.5-11.5 by the addition of the aqueous caustic solution. After the addition of phosgene ceased the methylene chloride phase was separated from the aqeuous phase, washed with an excess of dilute (0.01N) aqeuous HCl, and then washed three times with deionized water. The polymer was precipitated with methanol and dried at 95°C.

The second order glass transition temperature, Tg, of this polymer was determined to be 240.4°C.

EXAMPLE 13

This example illustrates the preparation of a polycarbonate derived from 1,1-bis(4-hydroxyphenyl) cyclopentadecane.

Into a reaction mixture containing 4.1 grams (0.01 mole) of 1,1-bis(4-hydroxyphenyl)cyclopentadecane, 0.03 milliliter of triethylamine, 0.004 gram of phenol, 200 milliliters of methylene chloride, and 150 milliliters of water there was added

sufficient 25% aqeuous sodium hydroxide solution to bring the pH to about 11. Phosgene was then introduced into this well stirred reaction mixture at a rate of 0.2 gram per minute for a period of 20 minutes while maintaining the pH of the reaction mixture at about 11 by the use of the aqueous caustic solution. After addition of the phosgene ceased the reaction mixture was stirred for 5 minutes, the methylene chloride phase was separated from the aqueous phase and was washed once with dilute (0.01N) HCl and three times with deionized water. The polymer was then precipitated with methanol and dried at 95°C. This polymer had an intrinsic viscosity in methylene chloride at 25°C of 0.38 dl/gm. The Tg of this polycarbonate was determined to be 188°C.

EXAMPLE 14

This example illustrates the preparation of a carbonate copolymer derived from 50 mole % bisphenol-A and 50 mole % 1,1-bis(4-hydroxyphenyl)cyclododecane.

Into a mixture of 42.1 grams (0.125 mole) of 4,4'-cyclododecylidene bisphenol, 28.5 grams (0.125 mole) of bisphenol-A, 0.7 milliliter of triethylamine, 0.12 gram (0.5 mole %) of phenol, 400 milliliters of methylene chloride, and 300 milliliters of water was introduced, at ambient temperature and a pH of about 11, i.e., 10.2-11.4, phosgene at the rate of

1 gram per minute for a period of 27 minutes while maintaining the pH of the two phase system at about 10.2-11.4 by the addition of a 25% aqueous sodium hydroxide solution. After addition of phosgene had been terminated the methylene chloride phase was separated from the aqueous phase, washed with an excess of dilute (0.01N) aqueous HCl and then washed three times with deionized water. The polymer was then precipitated with methanol. The resultant polymer had a second order glass transition temperature (Tg) of above 186°C.

EXAMPLE 15

Into a mixture of 352.2 grams (1.0 mole) of 4,4'-cyclododecylidenebisphenol, 2052 grams (9.0 moles) of bisphenol-A, 7 liters of methylene chloride, 6.5 liters of water, 28 milliliters of triethylamine, and 104.2 grams (3.5 mole %) of chroman-I (containing 10% bisphenol-A) were introduced, at ambient temperature, 1189 grams of phosgene over a period of 97 minutes while maintaining the pH of the two phase system at about 11 to 11.2 by the addition of a 25% aqueous sodium hydroxide solution. After addition of the phosgene had been terminated the methylene chloride phase was separated from the aqueous phase, washed with an excess of dilute (0.01N) aqueous HCl and then washed three times with deionized water. The polymer was precipitated

with steam and dried at 95°C. The resultant polycarbonate, which had an intrinsic viscosity in methylene chloride at 25°C of 0.475 dl/gm, was fed to an extruder, which extruder was operated at about 550°F, and the extrudate was comminuted into pellets.

The pellets were then injection molded at about 600°F into test bars of about 5" x 1/2" x 1/16" thick. The Heat Distortion Temperature Under Load (DTUL) of the test bars was determined according to ASTM D-648, at 264 psi. The DTUL of the test bars was 142.5°C.

The following example illustrates the preparation of a copolyester-carbonate resin of the instant invention.

EXAMPLE 16

To a reactor vessel there were added 400 milliliters of methylene chloride, 300 milliliters of water, 35.2 grams of 4,4'-cyclododecylidenebisphenol, 0.09 grams of phenol, and 0.28 milliliter of triethylamine. At a pH of about 11, 5.1 grams of isophthaloyl dichloride were added over a 15 minute period while maintaining the pH at about 11 by the addition of 35% aqueous caustic solution. After the addition of the isophthaloyl dichloride

was terminated 8.9 grams of phosgene were introduced over a 15 minute period while maintaining the pH at about 11 by the introduction of the 35% aqueous caustic solution. The polymer mixture was diluted with methylene chloride and the brine phase was separated. The resultant polymer containing organic phase was washed with HCl and then with water, and the polymer was recivered by methanol precipitation. The resultant copolyester-carbonate polymer had an intrinsic viscosity in methylene chloride at 25°C of 0.472 dl/gm and a Tg of 240°C.

The second order glass transition temperatures of the polymers of Examples 1-7 (comparative) and Examples 12-13 and 16, as well as the dihydric phenols from which these polymers are derived, are set forth in Table I.

TABLE I

| Example No. | Dihydric Phenol | Tg of resultant polymer |
|---|---|---|
| 1 (comparative) | 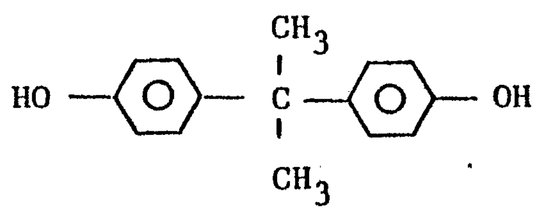 | 149°C |
| 2 (comparative) | 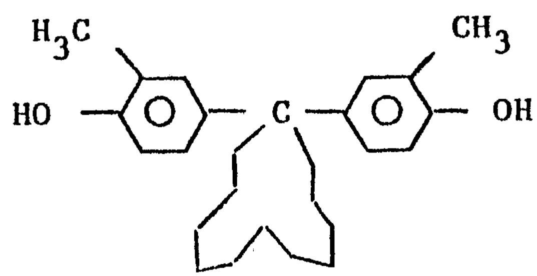 | 202°C |
| 3 (comparative) | 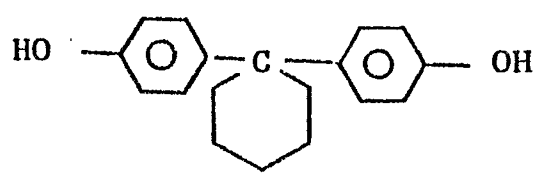 | 171°C |

TABLE I (cont'd)

| Example No. | Dihydric Phenol | Tg of resultant polymer |
| --- | --- | --- |
| 4 (comparative) | 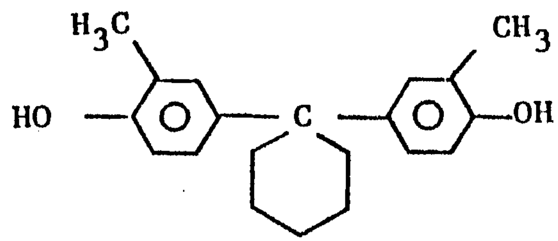 | 132°C |
| 5 (comparative) | 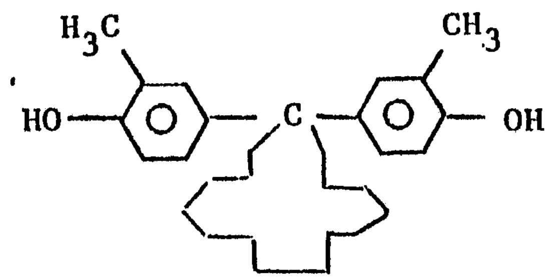 | 159°C |
| 6 (comparative) | 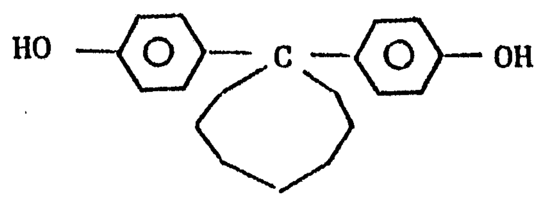 | 145°C |

TABLE I (cont'd)

| Example No. | Dihydric Phenol | Tg of resultant polymer |
|---|---|---|
| 7 (copolyester-carbonate) (comparative) | 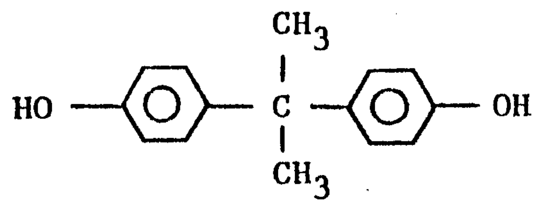 | 162.2°C |
| 12 | 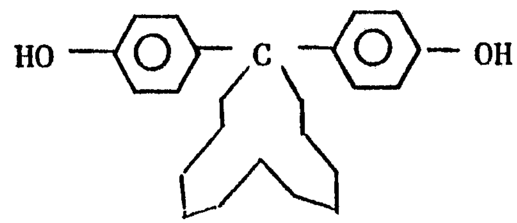 | 240.4°C |
| 13 | 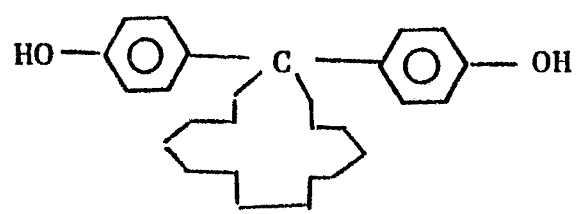 | 188°C |

TABLE I (cont'd)

| Example No. | Dihydric Phenol | Tg of resultant polymer |
|---|---|---|
| 14 | 50 mole % 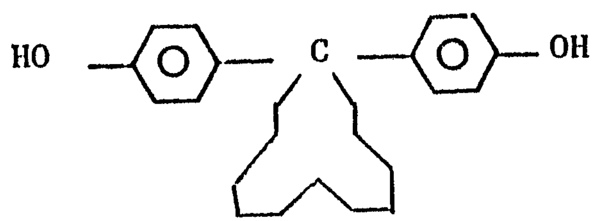 50 mole % 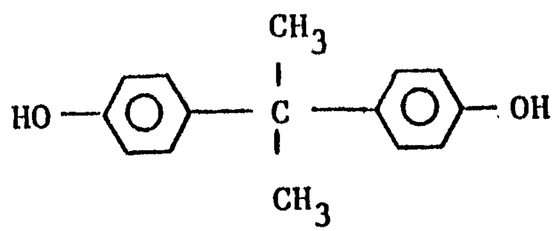 | 186°C |

TABLE I (cont'd)

| Example No. | Dihydric Phenol | Tg of resultant polymer |
| --- | --- | --- |
| 16 (copolyester-carbonate) | 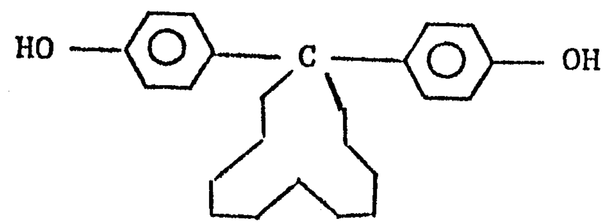 | 240.0°C |

EXAMPLE 17

A polycarbonate resin prepared substantially in accordance with the procedure of Example 14 is fed to an extruder to extrude the resin into strands and the strands are chopped into pellets. The pellets are then injection molded into test samples measuring about 2 1/2" x 1 1/2" x 1/8" and 1/4" thick.

These samples, which are the control, were then subjected to the Notched Izod test, ASTM D256, to determine their impact strength. The DTUL of samples of this resin was also determined.

The results of these tests are set forth in Table II.

The following examples illustrate the impact modified polycarbonates of the instant invention.

EXAMPLE 18

100 parts by weight of a polycarbonate resin prepared substantially in accordance with the procedure of Example 14 are mixed with 4.5 parts by weight of a linear low density polyethylene (sold by Exxon under the designation LPX). This mixture is fed to an extruder to extrude the mixture into strands and the strands are chopped into pellets. The pellets are then injection molded into test samples measuring 2 1/2" x 1 1/2" x 1/8" and 1/4" thick.

The Notched Izod of these samples is determined. The DTUL of samples of this resin mixture is also determined. The results of these tests are set forth in Table II.

EXAMPLE 19

100 parts by weight of a polycarbonate resin prepared substantially in accordance with the procedure of Example 14 are mixed with 9 parts by weight of a linear low density polyethylene (sold by Exxon under the designation LPX). This mixture is fed to an extruder to extrude the mixture into strands and the strands are chopped into pellets. The pellets are then injection molded into test samples measuring 2 1/2" x 1/2" x 1/8" and 1/4" thick.

The Notched Izod of these samples is determined. The DTUL of samples of this mixture is also determined. The results are set forth in Table II.

EXAMPLE 20

100 parts by weight of a polycarbonate resin prepared substantially in accordance with the procedure of Example 14 are mixed with 4 parts by weight of polyethylene-poly(ethyl-acrylate)copolymer. This mixture is fed to an extruder to extrude the mixture into strands and the strands are chopped into pellets. The pellets are then injection molded into test samples measuring 2 1/2" x 1/2" x 1/8" and 1/4" thick.

The Notched Izod of these samples is determined. The DTUL of samples of this resin mixture is also determined. The results of these tests are set forth in Table II.

EXAMPLE 21

100 parts by weight of a polycarbonate resin prepared substantially in accordance with the procedure of Example 14 are mixed with 6 parts by weight of a polydimethylsiloxane-polycarbonate block copolymer (sold by the General Electric Company under the designation LR resin). This mixture is fed to an extruder to extrude the mixture into strands and the strands are chopped into pellets. The pellets are then injection molded into test samples measuring about 2 1/2" x 1/2" x 1/8" and 1/4" thick.

The Notched Izod of these samples is determined. The DTUL of samples of this mixture is also determined. The results of these tests are set forth in Table II.

TABLE II

| Example No. | Parts by Weight Impact Modifier | Notched Izod (ft.lb./in.) | | DTUL (at 164 psi) |
|---|---|---|---|---|
| | | 1/8" | 1/4" | |
| 17 (control) | 0 | 1.67 | 0.7 | 173.5°C |
| 18 | 4.5 | 1.87 | 2.44 | 173.6°C |
| 19 | 9 | 2.33 | 2.41 | 173.9°C |
| 20 | 4 | 2.33 | 2.82 | 173.6°C |
| 21 | 6 | 1.87 | 1.72 | 173.9°C |

As illustrated by the data in Table II the impact modified carbonate polymers of the instant invention exhibit improved impact strengths as compared to the carbonate polymers which do not have admixed therewith any impact modifiers. These carbonate polymers also retain their improved heat resistances.

The carbonate polymers of the instant invention are useful in making films, sheets, and molded articles.

Obviosuly, other modifications and variations of the present invention are possible in light of the above teachings. It is, therefore, to be understood that changes may be made in the particular embodiments of the invention described and claimed which are within thefull intended scope of the invention as defined by the appended claims.

WHAT IS CLAIMED IS:

1. An impact modified polymeric composition exhibiting improved heat resistance comprising in admixture:

(i) at least one linear thermoplastic polymer derived from

(a) a carbonate precursor, and

(b) at least one dihydric phenol represented by the general formula

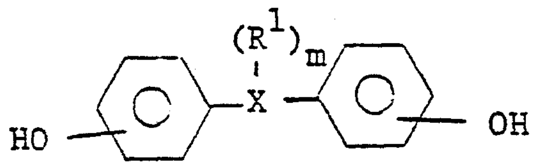

wherein

$R^1$ is independently selected from monovalent hydrocarbon radicals,

X is selected from monocyclic cycloalkylidene radicals containing from 10 to about 16 ring carbon atoms, and

m is a whole number having a value of from 0 up to the number of replaceable hydrogen atoms present on X; and

(ii) an impact modifying amount of at least one impact modifier which improves the impact properties of said linear thermoplastic polymer, said impact modifier present in amounts effective to improve the impact properties of said polymeric composition.

2. The composition of claim 1 wherein said impact modifier is present in a range of from about 2 to about 15 weight percent, based on the amount of impact modifier and the linear thermoplastic polymer.

3. The composition of claim 2 wherein said impact modifier is present in a range of from about 4 to about 10 weight percent.

4. The composition of claim 1 wherein said imact modifier is a polyacrylate, polyolefin, rubbery dienic polymer, styrenic polymer, polysiloxane-polycarbonate polymer, or mixtures thereof.

5. The composition of claim 4 wherein said impact modifier is a polyacrylate.

6. The composition of claim 4 wherein said impact modifier is a polyolefin.

7. The composition of claim 6 wherein said polyolefin is a low density polyolefin.

8. The composition of claim 7 wherein said impact modifier is a polysiloxane-polycarbonate polymer.

9. The composition of claim 1 wherein m is zero.

10. The composition of claim 9 wherein X is selected from cycloalkylidene radicals containing from 11 to about 16 ring carbon atoms.

11. The composition of claim 10 wherein X is selected from cycloalkylidene radicals containing from 12 to about 16 ring carbon atoms.

12. The composition of claim 11 wherein said dihydric phenol (b) is 1,1-bis(4-hydroxyphenyl)cyclododecane.

13. The composition of claim 12 wherein said carbonate precursor is phosgene.

14. The composition of claim 1 wherein the polymer (i) is derived from

(a),

(b), and

(c) at least one dihydric phenol represented by the general formula

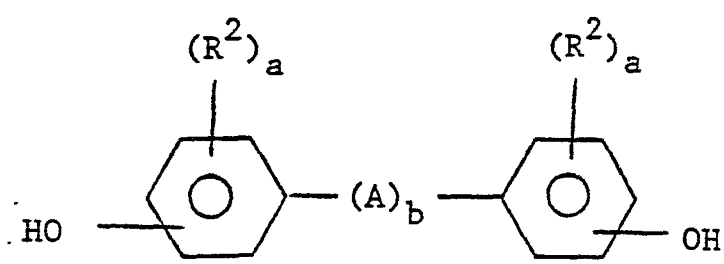

wherein:

$R^2$ is independently selected from halogen radicals, monovalent hydrocarbon radicals, and monovalent hydrocarbonoxy radicals;

a is independently selected from integers having a value of from 0 to 4 inclusive;

b is either zero or one; and

A is selected from alkylene radicals, alkylidene radicals, cycloalkylene and cycloalkylidene radicals containing from 4 to 6 ring carbon atoms,

$-S-$, $-S-S-$, $-O-$, $-\overset{O}{\overset{\|}{C}}-$, $-\overset{O}{\overset{\|}{S}}-$, and $-\underset{O}{\underset{\|}{\overset{O}{\overset{\|}{S}}}}-$.

15. The composition of claim 14 wherein the amount of said dihydric phenol (b) used is an amount effective to improve the heat resistance thereof.

16. The composition of claim 15 wherein said amount is in the range of from about 5 to about 90 weight percent of dihydric phenol (b), based on the total amounts of dihydric phenols (b) and (c).

17. The composition of claim 15 wherein m is zero.

18. The composition of claim 17 wherein X is selected from cycloalkylidene radicals containing from 11 to about 16 ring carbon atoms.

19. The composition of claim 18 wherein X is selected from cycloalkylidene radicals containing from 12 to about 16 ring carbon atoms.

20. The composition of claim 19 wherein said dihydric phenol (b) is 1,1-bis(4-hydroxyphenyl) cyclododecane.

21. The composition of claim 20 wherein said dihydric phenol (c) is bisphenol-A.

22. The composition of claim 21 wherein said carbonate precursor is phosgene.

23. The composition of claim 22 wherein said impact modifier is a polyacrylate, polyolefin, rubbery dienic polymer, styrenic polymer, or mixtures thereof.

24. The composition of claim 1 which further contains (iii) at least one thermopalstic polymer derived from

(d) a carbonate precursor, and

(e) at least one dihydric phenol represented by the general formula

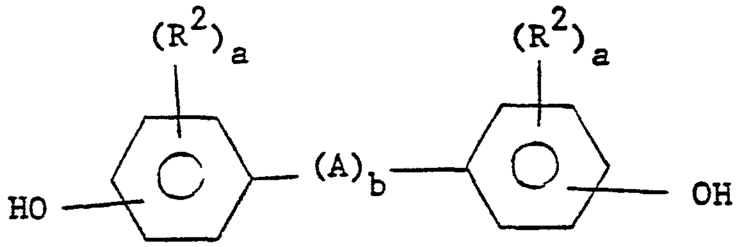

wherein

$R^2$ is independently selected from halogen radicals, monovalent hydrocarbon radicals, and monovalent hydrocarbonoxy radicals,

a is selected from integers having a value of from 0 to 4 inclusive,

b is either zero or one, and

A is selected from alkylene radicals, alkylidene radicals, cycloalkylene and cycloalkylidene radicals containing from 4 to 6 ring carbon atoms, -S-, -S-S-, -O-, $-\overset{O}{\overset{\|}{C}}-$, $-\overset{O}{\overset{\|}{S}}-$, and $-\overset{O}{\overset{\|}{\underset{\underset{O}{\|}}{S}}}-$.

25. The composition of claim 24 which contains an amount of polymer (i) effective to improve the heat resistance thereof.

26. The composition of claim 25 wherein said amount of polymer (i) is in the range of from about 5 to about 90 weight percent, based on the total amounts of polymers (i) and (iii).

27. The composition of claim 26 wherein m is zero.

28. The composition of claim 27 wherein X is selected from cycloalkylidene radicals containing from 11 to about 16 ring carbon atoms.

29. The composition of claim 28 wherein X is selected from cycloalkylidene radicals conatining from 12 to about 16 ring carbon atoms.

30. The composition of claim 29 wherein said dihydric phenol (b) is 1,1-bis(4-hydroxyphenyl)cyclododecane.

31. The composition of claim 30 wherein said carbonate precursor (a) is phosgene.

32. The composition of claim 31 wherein said dihydric phenol (e) is bisphenol-A.

33. The composition of claim 32 wherein said carbonate precursor (d) is phosgene.

34. The composition of claim 1 wherein said polymer (i) is derived from

(a),

(b), and

(f) at least one difunctional carboxylic acid or an ester forming reactive derivative thereof.

35. The composition of claim 34 wherein m is zero.

36. The composition of claim 35 wherein X is selected from cycloalkylidene radicals containing from 11 to about 16 ring carbon atoms.

37. The composition of claim 36 wherein X is selected from cycloalkylidene radicals containing from 12 to about 16 ring carbon atoms.

38. The composition of claim 37 wherein said dihydric phenol (b) is 1,1-bis(4-hydroxyphenyl) cyclododecane.

39. The composition of claim 38 wherein said carbonate precusror is phosgene.

40. The composition of claim 35 wherein said difunctional aromatic carboxylic acid is selected from isophthalic acid, terephthalic acid, and mixtures thereof.

41. The composition of claim 40 wherein said reactive derivatives are selected from isophthaloyl dixhloride, terephthaloyol dichloride, and mixtures thereof.

42. The composition of claim 41 wherein said dihydric phenol (b) is 1,1-bis(4-hydroxyphenyl)

cyclododecane.

43. The composition of claim 42 wherein said carbonate precursor is phosgene.

44. The composition of claim 34 wherein said polymer (i) is derived from

(a),

(b),

(f), and

(g) at least one dihydric phenol represented by the general formula

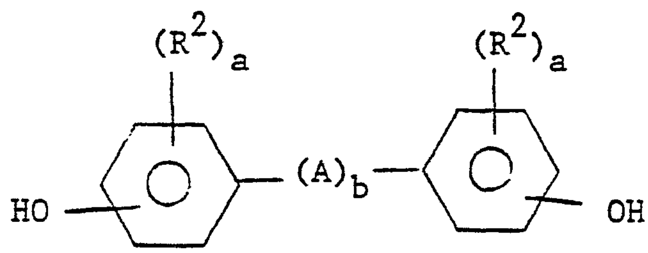

wherein

$R^2$ is independently selected from halogen radicals, monovalent hydrocarbon ardicals, and monovalent hydrocarbonoxy radicals,

a is independently selected from integers having a value of from 0 to 4 inclusive,

b is either zero or one, and

A is selected from alkylene radicals, alkylidene radicals, cycloalkylene and cyclaolkylidene radicals containing from 4 to 6 ring carbon atoms,

$-S-$, $-S-S-$, $-O-$, $-\overset{O}{\overset{\|}{C}}-$, $-\overset{O}{\overset{\|}{S}}-$, and $-\underset{O}{\underset{\|}{\overset{O}{\overset{\|}{S}}}}-$.

45. The composition of claim 44 wherein the amount of said dihydric phenol (b) utilized is an amount effective to improve the heat resistance thereof.

46. The composition of claim 45 wherein said amount is in the range of from about 5 to about 90 weight percent, based on the total amounts of dihydric phenols (b) and (g) used.

47. The composition of claim 45 wherein m is zero.

48. The composition of claim 47 wherein X is selected from cycloalkylidene radicals containing from 11 to about 16 ring carbon atoms.

49. The composition of claim 48 wherein X is selected from cycloalkylidene radicals containing from 12 to about 16 ring carbon atoms.

50. The composition of claim 49 wherein said dihydric phenol (b) is 1,1-bis(4-hydroxyphenyl) cyclododecane.

51. The composition of claim 45 wherein said ester forming reactive derivatives (f) are selected from isophthaloyl dichloride, terephthaloyl dichloride, and mixtures thereof.

52. The composition of claim 51 wherein said dihydric phenol (b) is 1,1-bis(4-hydroxyphenyl) cyclododecane.

53. The composition of claim 52 wherein said dihdyric phenol (g) is bisphenol-A.

54. The composition of claim 53 wherein said carbonate precursor is phosgene.

55. The composition of claim 34 which further contains (iv) at least one thermoplastic polymer derived from

(h) a carbonate precursor,

(j) at least one difunctional carboxylic acid or an ester forming reactive derivative thereof, and

(k) at least one dihydric phenol represented by the general formula

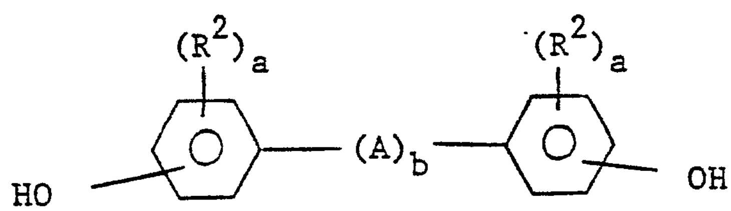

wherein

$R^2$ is independently selected from halogen radicals, monovalent hydrocarbon radicals, and monovalent hydrocarbonoxy radicals,

a is independently selected from integers

having a value of from 0 to 4 inclusive,

b is either zero or one, and

A is selected from alkylene radicals, alkylidene radicals, cycloalkylene and cycloalkylidene radicals containing from 4 to 6 ring carbon atoms,

$$-S-,\ -S-S-,\ -O-,\ -\overset{\overset{O}{\|}}{C}-,\ -\overset{\overset{O}{\|}}{S}-,\ \text{and}\ -\underset{\underset{O}{\|}}{\overset{\overset{O}{\|}}{S}}-.$$

56. The composition of claim 55 which contains an amount of polymer (i) effective to improve the heat resistance thereof.

57. The composition of claim 56 wherein said amount of polymer (i) is in the range of from about 5 to about 90 weight percent, based on the total amounts of polymers (i) and (iv).

58. The composition of claim 56 wherein m is zero.

59. The composition of claim 58 wherein X is selected from cycloalkylidene radicals containing from 11 to about 16 ring carbon atoms.

60. The composition of claim 59 wherein X is selected from cycloalkylidene radicals containing from 12 to about 16 ring carbon atoms.

61. The composition of claim 60 wherein said dihdyric phenol (b) is 1,1-bis(4-hydroxyphenyl) cyclododecane.

62. The composition of claim 61 wherein said ester forming reactive derivative (f) is selected from isophthaloyl dichloride, terephthaloyl dichloride, and mixtures thereof.

63. The composition of claim 62 wherein said carbonate precursor is phosgene.

64. The composition of claim 63 wherein said dihdyric phenol (k) is bisphenol-A.

65. The composition of claim 64 wherein said ester forming reactive derivative (j) is selected from isophthaloyl dichloride, terephthaloyl dichloride, and mixtures thereof.

66. The composition of claim 65 wherein said carbonate precursor (h) is phosgene.

67. The composition of claim 1 which further contains (v) at least one polymer derived from

(m) a carbonate precursor,

(n) at least one difunctional carboxylic acid or an ester forming reactive derivative thereof, and

(o) at least one dihydric phenol represented by the general formula

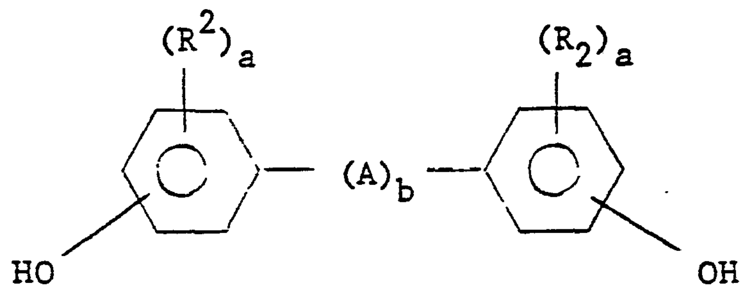

wherein

$R^2$ is independently selected from halogen radicals, monovalent hydrocarbon radicals, and monovalent hydrocarbonoxy radicals,

a is selected from integers having a value of from 0 to 4 inclusive,

b is either zero or one, and

A is selected from alkylene radicals, alkylidene radicals, cycloalkylene and cycloalkylidene radicals containing from 4 to 6 ring carbon atoms,

$-S-, -S-S-, -O-, -\overset{O}{\overset{\|}{C}}-, -\overset{O}{\overset{\|}{S}}-,$ and $-\underset{\underset{O}{\|}}{\overset{O}{\overset{\|}{S}}}-.$

68. The composition of claim 1 which further contains (vi) at least one polymer derived from

(p) a carbonate precursor,

(q) at least one difunctional carboxylic acid or an ester forming reactive derivative thereof, and

(r) at least one dihydric phenol represented by the general formula

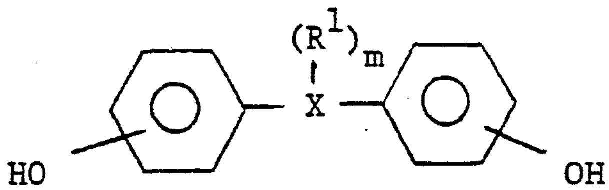

69. The composition of claim 68 wherein m is zero.

70. The composition of claim 69 wherein X is selected from cycloalkylidene radicals containing from 11 to about 16 ring carbon atoms.

71. The composition of claim 71 wherein X is selected from cycloalkylidene radicals containing from 12 to about 16 ring carbon atoms.

72. The composition of claim 34 which further contains (vii) at least one polymer derived from

(s) a carbonate precursor, and

(t) at least one dihydric phenol represented by the general formula

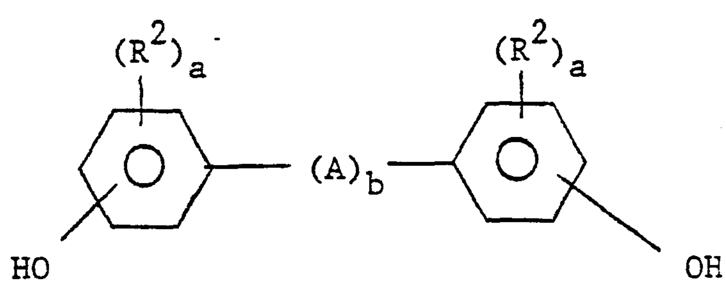

wherein

$R^2$ is independently selected from halogen radicals, monovalent hydrocarbon radicals, and monovalent hydrocarbonoxy radicals,

a is independently selected from positive integers having a avlue of from 0 to 4 inclusive,

b is either zero or one, and

A is selected from alkylene radicals, alkylidene radicals, cycloalkylene and cycloalkylidene radicals containing from 4 to 6 ring carbon atoms,

-S-, -S-S-, -O-, $-\overset{\overset{O}{\|}}{C}-$, $-\overset{\overset{O}{\|}}{S}-$, and $-\underset{\underset{O}{\|}}{\overset{\overset{O}{\|}}{S}}-$.

European Patent Office

# EUROPEAN SEARCH REPORT

0164477

Application number

EP 84 40 1353

| DOCUMENTS CONSIDERED TO BE RELEVANT | | | |
|---|---|---|---|
| Category | Citation of document with indication, where appropriate, of relevant passages | Relevant to claim | CLASSIFICATION OF THE APPLICATION (Int. Cl 4) |
| X | EP-A-0 089 540 (BAYER)<br>* Claims 1-8; page 6 *<br>--- | 1-4, 9-23 | C 08 L 69/00<br>//(C 08 L 69/00<br>33/04<br>23/00<br>25/04<br>51/04<br>55/00<br>83/10<br>69/00) |
| X | FR-A-2 371 486 (BAYER)<br>* Claims 1-6; page 3 *<br>--- | 1-4, 9-23 | |
| X | DE-A-3 326 562 (MOBAY)<br>* Claims 1-7; page 11,12,13 *<br>--- | 1,24-39 | |
| X | DE-A-3 130 774 (BASF)<br>* Claims 1-4; page 8, paragraph 4, page 9 *<br>--- | 1-4, 9-23 | TECHNICAL FIELDS SEARCHED (Int. Cl 4) |
| X | FR-A-2 175 714 (BAYER)<br>* Claims 1-3 *<br>--- | 1-4, 9-23 | C 08 L<br>C 08 G |
| X | WO-A-80 00 153 (GENERAL ELECTRIC)<br>* Claims 1,2,3; page 4, lines 15-31 *<br>---<br>-/- | 1-7, 9-23 | |

The present search report has been drawn up for all claims

| Place of search | Date of completion of the search | Examiner |
|---|---|---|
| THE HAGUE | 08-02-1985 | DECOCKER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO Form 1503 03 82

European Patent Office

**EUROPEAN SEARCH REPORT**

0164477

Application number

EP 84 40 1353

Page 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | WO-A-80 00 084 (GENERAL ELECTRIC)<br>* Claim 1 *<br>----- | 1,3,4,8 | |
| | | | TECHNICAL FIELDS SEARCHED (Int. Cl.4) |
| | | | |

The present search report has been drawn up for all claims

| Place of search | Date of completion of the search | Examiner |
|---|---|---|
| THE HAGUE | 08-02-1985 | DECOCKER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82